# EUROPÄISCHE PATENTSCHRIFT

(11) **EP 2 225 327 B1**
(45) Veröffentlichungstag und Bekanntmachung des Hinweises auf die Patenterteilung: **03.07.2013**
(21) Anmeldenummer: 08863422.5
(22) Anmeldetag: 06.12.2008
(51) Int. Cl.: C08L 69/00, C08K 5/00, C08K 5/5313

(54) **FLAMMGESCHÜTZTE SCHLAGZÄHMODIFIZIERTE POLYCARBONAT-ZUSAMMENSETZUNGEN**
FLAME-PROOF IMPACT RESISTANT-MODIFIED POLYCARBONATE COMPOSITIONS
COMPOSITIONS POLYCARBONATE IGNIFUGÉES À RÉSILIENCE MODIFIÉE

(30) Priorität: 20.12.2007 DE 102007061762
(43) Veröffentlichungstag der Anmeldung: 08.09.2010
(73) Patentinhaber: Bayer Intellectual Property GmbH, 40789 Monheim (DE)
(72) Erfinder: ECKEL, Thomas, 41540 Dormagen (DE); TASCHNER, Vera, 50823 Köln (DE); WENZ, Eckhard, 50996 Köln (DE)
(74) Vertreter: BIP Patents
(86) Internationale Anmeldenummer: PCT/EP2008/010369
(87) Internationale Veröffentlichungsnummer: WO 2009/080194

(56) Entgegenhaltungen:
- EP-A- 1 624 015
- WO-A-2005/044906
- DE-A1- 10 234 420
- DE-A1- 19 734 667

## Beschreibung

Die vorliegende Erfindung betrifft Polycarbonat-Zusammensetzungen, welche durch das Verfahren der Massepolymerisation hergestellte kautschukhaltige Pfropfpolymerisate sowie ein Salz einer Phosphinsäure enthalten, die Verwendung der Polycarbonat-Zusammensetzungen zur Herstellung von Formkörpern und die Formkörper selbst.

WO-A 2005/044906 offenbart thermoplastische Formmassen enthaltend mindestens ein Metallsalz der Hypophosphorsäure und mindestens ein aromatisches Polycarbonatharz und deren Mischung mit einem styrolhaltigen Pfropfcopolymerharz mit einem Kautschukanteil von 5-15%. Die Anteile des styrolhaltigen Pfropfcopolymers betragen 10-40 Gew.-%. Die erhaltenen Formmassen zeichnen sich durch gute Flammwidrigkeit, hohe thermische Stabilität unter Verarbeitungsbedingungen und guter Wetter-Resistenz aus. Aufgrund des niedrigen Kautschukanteiles sind andere Eigenschaften, insbesondere mechanische Eigenschaften auf einem niedrigen Niveau.

WO-A 1999/57192 beschreibt thermoplastische Formmassen enthaltend 5-96 Gew.% eines Polyesters oder Polycarbonat, 1-30 Gew.% eines Phosphinsäuresalzes und/oder eines Diphosphinsäuresalzes und/oder deren Polymere, 1-30 Gew.% mindestens eines organischen phosphorhaltigen Flammschutzmittels, und mögliche weitere Additive.

DE-A 102004049342 offenbart thermoplastische Formmassen enthaltend 10-98 Gew.% thermoplastisches Polymer, 0,01 - 50 Gew.% hochverzweigtes Polycarbonat oder hochverzweigter Polyesters oder deren Mischungen, 1-40 Gew.% halogenfreies Flammschutzmittels ausgewählt aus der Gruppe der P-haltigen oder N-haltigen Verbindungen oder der P-N-Kondensate oder deren Mischungen, und mögliche weitere Additive.

JP-A 2001-335699 beschreibt flammgeschützte Harzzusammensetzungen enthaltend zwei oder mehrere thermoplastische Harze ausgewählt aus Styrolharz, aromatisches Polyesterharz, Polyamidharz, Polycarbonatharz und Polyphenylenetherharz und ein oder mehrere (an)organische Phosphinsäuresalze, und mögliche weitere Additive.

JP-A 2001-261973 (Daicel Chemical Industries Ltd.) beschreibt Zusammensetzungen aus thermoplastischen Harzen und (an)organischen Phosphinsäuresalzen. Als Beispiel ist eine Kombination angeführt aus PBT, Calciumphosphinat und PTFE.

JP-A 2002-161211 offenbart Zusammensetzungen aus thermoplastischen Harzen und Flammschutzmitteln wie Salzen der Phosphin- und Phosphorsäure und deren Derivate. Als Beispiel ist eine Kombination angeführt aus PBT, ABS, Polyoxyphenylen, Calciumphosphinat, einem Organophosphat und Glasfasern.

Aus EP 1 624 015 A1 sind Zusammensetzungen mit organischen Phosphinsäurederivaten bekannt als Flammschutzmittel bekannt.
DE 197 34 667 A1 beschreibt Zusammensetzungen mit BDP (Bisphenol-A-Diphoshat), das in den Zusammensetzungen der vorliegenden Erfindung nicht enthalten ist.

Nach dem Stand der Technik übliche Flammschutzmittel für Polycarbonat/ABS-Blends sind organische, aromatische Phosphate. Diese Verbindungen können niedermolekular, als Gemisch verschiedener Oligomeren oder als Gemisch von Oligomeren mit niedermolekularen Verbindungen vorliegen (z.B. WO-A 99/16828 und WO-A 00/31173). Der guten Wirksamkeit als Flammschutzmittel steht die stark weich machende Wirkung dieser Verbindungen auf die polymeren Bestandteile als Nachteil entgegen, so dass die Wärmeformbeständigkeit dieser Formmassen für viele Anwendungen nicht zufriedenstellend ist.

Aufgabe der vorliegenden Erfindung ist die Bereitstellung von schlagzähmodifizierten Polycarbonat-Formmssen mit einer optimalen Kombination aus hoher Warmeformbeständigkeit, gutem Flammschutz, exzellenten mechanischen Eigenschaften und einer guten Hydrolysebeständigkeit.

Es wurde nun überraschend gefunden, dass Formmassen bzw. Zusammensetzungen enthaltend A) Polycarbonat, B) kautschukmodifiziertes Pfropfpolymerisat hergestellt im Masse-, Lösungs- oder Masse-Suspensions-Polymerisationsverfahren und C) ein Salz einer Phosphinsäure das gewünschte Eigenschaftsprofil aufweisen.

Es wurde somit überraschend gefunden, dass Zusammensetzungen enthaltend
A) 80 bis 90 Gew.-Teile (jeweils bezogen auf die Summe der Gewichtsteile der Komponenten A+B+C) aromatisches Polycarbonat und/oder aromatisches Polyestercarbonat,
B) 3 bis 8 Gew.-Teile (jeweils bezogen auf die Summe der Gewichtsteile der Komponenten A+B+C) kautschukmodifiziertes Pfropfpolymerisat hergestellt im Masse-, Lösungs- oder Masse-Suspensions-Polymerisationsverfahren,
C) 7 bis 12 Gew.-Teile (jeweils bezogen auf die Summe der Gewichtsteile der Komponenten A+Bi C) eines Salzes oder einer Mischung von Salzen einer Phosphinsäure der Formel (IV), wie in Anspruch 1 definiert,
D) 0 bis 20 Gew.-Teile (bezogen auf die Summe der Gewichtsteile der Komponenten A+B+C = 100) kautschukfreies Vinyl(Co)Polymerisat und/oder Polyalkylenterephthalat, bevorzugt ist die Zusammensetzung frei von kautschukfreiem Vinyl(Co)Polymerisat und/oder Polyalkylenterephthalat,
E) 0 bis 50 Gew.-Teile, bevorzugt 0,5 bis 25 Gew.-Teile (jeweils bezogen auf die Summe der Gewichtsteile der Komponenten A+B+C = 100) Zusatzstoffe, wobei die Zusammensetzungen frei sind von phosphorhaltigen Flammschutzmitteln aus den Gruppen der mono- und oligomeron Phosphor- und Phosphonsäure ester, Phosphonalamine und Phosphazene
und wobei alle Gewichtsteilangaben in der vorliegenden Anmeldung so normiert sind, dass die Summe der Gewichtsteile der Komponenten A+B+C in der Zusammensetzung 100 ergeben,
die oben genannte technische Aufgabe lösen.

Ein zu hoher Anteil an Komponente B hat den Nachteil, dass das Brandverhalten und die Wärmeformbeständigkeit (Vicat B) verschlechtert sind (siehe Vergleichsbeispiel 2).

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 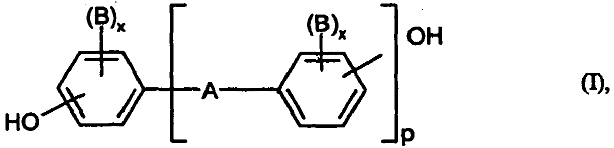 wobei
- A: eine Einfachbindung, C₁ bis C₅-Alkylen, C₂ bis C₅-Alkyliden, C₅ bis C₆-Cycloalkyliden, - O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 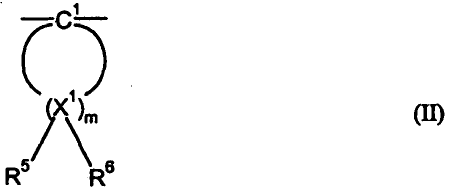 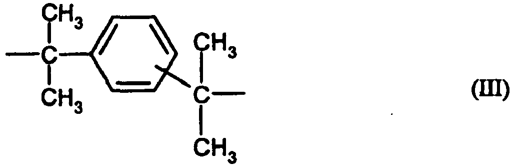
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%mol-%, und 10 mol-%mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.
Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 mol%, bezogen im Falle der phenolischen Kettenabbrecher auf Mol Diphenol und im Falle von Monocarbonsäurechlorid-Kettenabbrecher auf Mol Dicarbonsäuredichlorid.
Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol%, besonders bevorzugt bis zu 50 mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ)) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Das kautschukmodifizierte Pfropfpolymerisat B umfaßt ein statistisches (Co)polymerisat aus Monomeren gemäß B.1.1 und/oder B.1.2, sowie einem mit dem statistischen (Co)polymerisat aus B.1.1 und/oder B.1.2 gepfropften Kautschuk B.2, wobei die Herstellung von B in bekannter Weise nach einem Masse- oder Lösungs- oder Masse-Suspensions-Polymerisationsverfahren erfolgt, wie z.B. in den US-3 243 481, US-3 509 237, US-3 660 535, US-4 221 833 und US-4 239 863 beschrieben.

Beispiele für Monomere B.1.1 sind Styrol, α-Methylstyrol, halogen- oder alkylkernsubstituierte Styrole wie p-Methylstyrol, p-Chlorstyrol, (Meth)acrylsäure-C₁-C₈-alkylester wie Methylmethacrylat, n-Butylacrylat und t-Butylacrylat. Beispiele für Monomere B.1.2 sind ungesättigte Nitrile wie Acrylnitril, Methacrylnitril, (Meth)Acrylsäure-C₁-C₈-alkylester wie Methylmethacrylat, n-Butylacrylat, t-Butylacrylat, Derivate (wie Anhydride und Imide) ungesättigter Carbonsäuren wie Maleinsäureanhydrid und N-Phenyl-maleinimid oder Mischungen davon.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, Dien-Vinyl-Blockcopolymer-Kautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Mischungen aus solchen Kautschuken bzw. Silikon-Acrylat-Kompositkautschuke, in denen die Silikon- und die Acrylatkomponenten chemisch miteinander (z.B. durch Pfropfung) verknüpft sind.

Bevorzugte Kautschuke B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B.2 unterhalb 10°C, vorzugsweise unterhalb -10°C liegt. Besonders bevorzugt wird reiner Polybutadienkautschuk.

Vorzugsweise weist das Pfropfpolymerisat aus den Komponenten B.1 und B.2 eine Kern-Schale-Struktur auf, wobei die Komponente B.1 die Schale bildet (auch als Hülle bezeichnet) und die Komponente B.2 den Kern ausbildet (siehe bspw. Ullmann's Encyclopedia of Industrial Chemistry, VCH-Verlag, Vol. A21, 1992, Seite 635 und Seite 656.

Die Komponente B kann, falls erforderlich und wenn dadurch die Kautschukeigenschaften der Komponente B.2 nicht beeinträchtigt werden, zusätzlich noch geringe Mengen, üblicherweise weniger als 5 Gew.-%, vorzugsweise weniger als 2 Gew.-%, bezogen auf B.2, vernetzend wirkender ethylenisch ungesättigter Monomeren enthalten. Beispiele für solche vernetzend wirkenden Monomere sind Alkylendiol-di-(meth)-acrylate, Polyester-di-(meth)-acrylate, Divinylbenzol, Trivinylbenzol, Triallylcyanurat, Allyl-(meth)-acrylat, Diallylmaleat und Diallylfumarat.

Das kautschukmodifizierte Pfropfpolymerisat B wird erhalten durch Pfropfpolymerisation von 50 bis 99, bevorzugt 65 bis 98, besonders bevorzugt 75 bis 95 Gew.-Teilen eines Gemischs aus 50 bis 99, bevorzugt 60 bis 95 Gew.-Teilen Monomeren gemäß B.1.1 und 1 bis 50, bevorzugt 5 bis 40 Gew.-Teilen Monomeren gemäß B.1.2 in Gegenwart von 1 bis 50, vorzugsweise 2 bis 35, besonders bevorzugt 5 bis 25 Gew.-Teilen der Kautschukkomponente B.2, wobei die Pfropfpolymerisation nach einem Masse- oder Lösungs- oder Masse-Suspensions-Polymerisationsverfahren durchgeführt wird.

Wesentlich bei der Herstellung der kautschukmodifizierten Pfropfpolymerisate B ist, daß die Kautschukkomponente B.2 vor der Pfropfpolymerisation im Gemisch der Monomeren B.1.1 und/oder B.1.2 in gelöster Form vorliegt. Die Kautschukkomponente B.2 darf also weder so stark vernetzt sein, daß eine Lösung in B.1.1 und/oder B.1.2 unmöglich wird, noch darf B.2 zu Beginn der Pfropfpolymerisation bereits in Form diskreter Teilchen vorliegen. Die für die Produkteigenschaften von B wichtige Teilchenmorphologie und zunehmende Vernetzung von B.2 bildet sich erst im Verlauf der Pfropfpolymerisation aus (siehe hierzu beispielsweise Ullmann, Encyclopädie der technischen Chemie, Band 19, S. 284 ff., 4. Auflage 1980).

Das statistische Copolymerisat aus B.1.1 und B.1.2 liegt üblicherweise im Polymerisat B zu einem Teil auf dem Kautschuk B.2 auf oder eingepfropft vor, wobei dieses Pfropfmischpolymerisat diskrete Teilchen. im Polymerisat B ausbildet. Der Anteil des auf- oder eingepfropften Copolymerisats aus B.1.1 und B.1.2 am gesamten Copolymerisat aus B.1.1 und B.1.2 - also die Pfropfausbeute (= Gewichtsverhältnis der tatsächlich gepfropften Pfropfmonomeren zu den insgesamt verwendeten Pfropfmonomeren x 100, angegeben in %) - sollte dabei 2 bis 40 %, vorzugsweise 3 bis 30 %, besonders bevorzugt 4 bis 20 % betragen.

Der mittlere Teilchendurchmesser der resultierenden gepfropften Kautschukteilchen (ermittelt durch Auszählung an elektronenmikroskopischen Aufnahmen) liegt im Bereich von 0,5 bis 5 µm, vorzugsweise von 0,8 bis 2,5 µm. Die mittlere Teilchengröße d₅₀ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-796) oder durch Auszählung an elektronenmikroskopischen Aufnahmen bestimmt werden. Vorzugsweise weist das Pfropfpolymerisat gemäß Komponente B eine Kern-Schale-Struktur auf.

In einer bevorzugten Ausführungsform handelt es sich bei dem Pfropfpolymerisat gemäß Komponente B) um ein im Masse-, Lösungs- oder Masse-Suspensions-Polymerisationsverfahren hergestelltes Pfropfpolymerisat, das einen Kautschukgehalt (entspricht dem Anteil der Komponente B.2 am Propfpolymerisat) von 16 bis 25 Gew.-%, vorzugsweise von 17 bis 19 Gew.-% aufweist sowie eine Pfropfhülle, die jeweils bezogen auf die Monomere der Pfropfhülle 22 bis 27 Gew.-% mindestens eines der Monomeren gemäß B.1.2 und 73 bis 78 Gew.-% mindestens eines der Monomeren gemäß B.1.1 enthält. Höchst bevorzugt enthält das Pfropfpolymerisat einen Butadien-Styrol-Blockcopolymerkautschuk als Kern und eine Hülle aus Styrol (B.1.1) und Acrylnitril (B.1.2). Das Pfropfpolymer weist einen Gelgehalt (gemessen in Aceton) von 20 bis 30 Gew.-%, vorzugsweise von 22 bis 26 Gew.-% auf. Der Gelgehalt der Pfropfpolymerisate wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Pfropfpolymerisate hergestellt nach dem Emulsionspolymerisationsverfahren haben gegenüber den erfindungsgemäßen Pfropfpolymeren den Nachteil, dass die Hydrolysebeständigkeit auf einem für viele Anwendungen nicht ausreichenden Niveau liegt. Auch kann der üblicherweise hohe Kautschuk-Anteil der Emulsionspfropfpolymerisate zu einer Verschlechterung des Brandverhaltens führen.

Enthält das erfindungsgemäße Pfropfpolymerisat einen Kautschukgehalt von unter 16 Gew.-%, hat dies den Nachteil, dass die mechanischen Eigenschaften, insbesondere die Kerbschlagzähigkeit und die Chemikalienbeständigkeit, auf einem für viele Anwendungen nicht ausreichenden Niveau liegen.

### Komponente C

Unter dem Salz einer Phosphinsäure (Komponente C) im erfindungsgemäßen Sinne sind das Salz einer Phosphinsäure mit einem beliebigen Metallkation zu verstehen. Es können auch Mischungen von Salzen eingesetzt werden, die sich in Ihrem Metallkation unterscheiden. Bei den Metallkationen handelt es sich um die Kationen Metalle der 1. Hauptgruppe (Alkalimetalle, vorzugsweise Li⁺, Na⁺, K⁺), der 2. Hauptgruppe (Erdalkalimetalle; vorzugsweise Mg²⁺, Ca²⁺, Sr²⁺, Ba²⁺, besonders bevorzugt Ca²⁺) oder der 3. Hauptgruppe (Elemente der Borgruppe; vorzugsweise Al³⁺) und/oder der 2., 7. oder 8. Nebengruppe (vorzugsweise Zn²⁺, Mn²⁺, Fe²⁺, Fe³⁺) des Periodensystems ist.

Vorzugsweise wird ein Salz oder eine Mischung von Salzen einer Phosphinsäure der Formel (IV) eingesetzt, 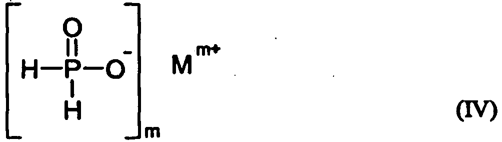 worin M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bevorzugt 1 bis 3 und besonders bevorzugt 2 oder 3 bedeutet) des Periodensystems ist.

Besonders bevorzugt sind in Formel (IV)
für m = 1 die Metallkationen M⁺= Li⁺, Na⁺, K⁺,
für m = 2 die Metallkationen M²⁺ = Mg²⁺, Ca²⁺,Sr²⁺, Ba²⁺ und
für m = 3 die Metallkationen M³⁺ = Al³⁺,
höchst bevorzugt sind Ca²⁺ (m = 2) und Al³⁺ (m = 3).

In einer bevorzugten Ausführungsform ist die mittlere Teilchengröße d₅₀ des Phosphinsäuresalzes (Komponente C) kleiner als 80 µm, vorzugsweise kleiner als 60 µm, besonders bevorzugt ist d₅₀ zwischen 10 µm und 55 µm. Die mittlere Teilchengröße d₅₀ ist der Durchmesser, oberhalb und unterhalb dessen jeweils 50 Gew.-% der Teilchen liegen. Es können auch Mischungen von Salzen eingesetzt werden, die sich in ihrer mittleren Teilchengröße d₅₀ unterscheiden.

Diese Anforderungen an die Teilchengröße d₅₀ des Phosphinsäuresalzes sind jeweils mit dem technischen Effekt verbunden, dass die Flammschutzeffizienz des Phosphinsäuresalzes erhöht ist.

Das Phosphinsäuresalz kann entweder alleine oder in Kombination mit anderen phosphorhaltigen Flammschutzmitteln eingesetzt werden. Vorzugsweise sind die erfindungsgemäßen Zusammensetzungen frei von phosphorhaltigen Flammschutzmitteln ausgewählt aus den Gruppe der Mono- und oligomeren Phosphor- und Phosphonsäureester, Phosphonatamine und Phosphazene. Diese anderen phosphorhaltigen Flammschutzmitteln wie beispielsweise die Mono- und oligomeren Phosphor- und Phosphonsäureester besitzen gegenüber den Phosphinsäuresalzen den Nachteil, dass diese die Wärmeformbeständigkeit der Formmassen herabsetzen.

### Komponente D

Die Komponente D umfasst ein oder mehrere thermoplastische Vinyl(Co)Polymerisate D.1 und/oder Polyalkylenterephthalate D.2.

Geeignet sind als Vinyl(Co)Polymerisate D.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
D.1.1 50 bis 99, vorzugsweise 60 bis 80 Gew.-Teilen Vinylaromaten und/oder kernsubstituierten Vinylaromaten wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
D.1.2 1 bis 50, vorzugsweise 20 bis 40 Gew.-Teilen Vinylcyanide (ungesättigte Nitrile) wie Acryl-nitril und Methacrylnitril und/oder (Meth)Acryl-säure-(C₁-C₈)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate D.1 sind harzartig, thermoplastisch und kautschukfrei. Besonders bevorzugt ist das Copolymerisat aus D.1.1 Styrol und D.1.2 Acrylnitril.

Die (Co)Polymerisate gemäß D.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente D.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew.-%, bezogen auf die Diolkomponente Ethylenglykol- und/oder Butandiol-1,4-Reste.

Die bevorzugten Polyalkylenterephthalate können neben Terephthalsäureresten bis zu 20 mol%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol%, vorzugsweise bis zu 10 mol%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente E

Die Zusammensetzung kann weitere handelsübliche Zusatzstoffe gemäß Komponente E) wie Flammschutzsynergisten, von Komponente B) verschiedene kautschukmodifizierte Pfropfpolymerisate, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, AlkylSulfonate oder Polyamid-haltige Polymere), Säuren, Füll- und Verstärkungsstoffe (beispielsweise Glas- oder Karbonfasern, Glimmer, Kaolin, Talk, CaCO₃ und Glasschuppen) sowie Farbstoffe und Pigmente enthalten.

Die von Komponente B verschiedenen Pfropfpolymerisate werden durch radikalische Polymerisation, z.B. durch Emulsions-, Suspensions- oder Lösungspolymerisation, hergestellt. Bevorzugt sind die erfmdungsgemäßen Zusammensetzungen frei von Komponente B verschiedener Pfropfpolymerisate.

### Herstellung der Formmassen und Formkörper

Die erfindungsgemäßen thermoplastischen Formmassen werden hergestellt, indem man die jeweiligen Bestandteile in bekannter Weise vermischt und bei Temperaturen von 260°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer, für Büromaschinen wie Monitore, Flatscreens, Notebooks, Drucker, Kopierer; Platten, Rohre, Elektroinstalladonskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

### Beispiele

### Komponente A

Lineares Polycarbonat auf Basis Bisphenol-A mit einem gewichtsgemittelten Molekulargewicht M_{w} von 27500 g/mol (bestimmt durch GPC).

### Komponente B

ABS-Polymerisat mit Kern-Schale-Struktur hergestellt durch Masse-Polymerisation von 82 Gew.-% bezogen auf das ABS-Polymerisat einer Mischung aus 24 Gew.-% Acrylnitril und 76 Gew.-% Styrol in Gegenwart von 18 Gew.-% bezogen auf das ABS-Polymerisat eines Polybutadien-Styrol-Blockcopolymerkautschuks mit einem Styrolgehalt von 26 Gew.-%. Der Gelgehalt des ABS-Polymerisats beträgt 24 Gew.-% (gemessen in Aceton).

### Komponente C

### Komponente C-1 (Vergleich)

### Bisphenol-A-basierendes Oligophosphat

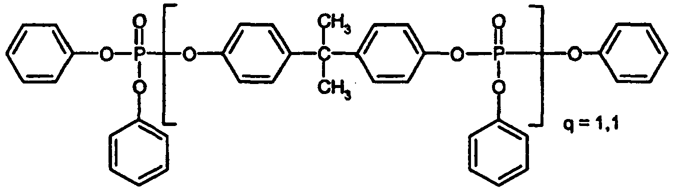

### Komponente C-2

Calciumphosphinat, mittlere Teilchengröße d₅₀= 50 µm.

### Komponente E

- Komponente E-1:: Polytetrafluorethylen (PTFE)
- Komponente E-2:: Pentaerythrittetrastearat
- Komponente E-3:: Irganox^{®} B900 (Hersteller: Ciba Specialty Chemicals Inc., Basel, Schweiz)

### Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260°C compoundiert und granuliert. Die fertigen Granulate werden auf einer Spritzgussmaschine zu den entsprechenden Probekörpern verarbeitet (Massetemperatur 240°C, Werkzeugtemperatur 80°C, Fließfrontgeschwindigkeit 240 mm/s).

Die Charakterisierung erfolgt gemäß DIN EN ISO 180/1A (Izod-Kerbschlagzähigkeit aₖ), DIN EN ISO 527 (Zug-E-Modul und Reißdehnung), DIN ISO 306 (Vicat-Erweichungstemperatur, Verfahren B mit 50 N Belastung und einer Heizrate von 120 K/h), ISO 11443 (Schmelzeviskosität), DIN EN ISO 1133 (Schmelze-Volumen-Fließrate, melt volume-flow rate MVR) und UL 94 V (an Stäben der Abmessung 127 x 12,7 x 1,5 mm gemessen).

Hydrolysetest: Als Maß für die Hydrolysebeständigkeit der so hergestellten Zusammensetzungen dient die Änderung des MVR gemessen nach ISO 1133 bei 240°C mit einer Stempellast von 5 kg bei einer Lagerung (1d = 1 Tag, 2d = 2 Tage, 5d = 5 Tage, 6d = 6 Tage, 7d = 7 Tage) des Granulats bei 95°C und 100% relativer Luftfeuchte. Der MVR-Wert vor der entsprechenden Lagerung wird in Tabelle 1 als "MVR-Wert der Ausgangsprobe" bezeichnet

Unter Chemikalienbeständigkeit (ESC-Verhalten) wird die Zeit bis zum Bruch bei 2,4 % Randfaserdehnung nach Lagerung des Probekörpers in Toluol/Isopropanol (60/40 Vol.-Teile) bei Raumtemperatur angegeben.

Die erfindungsgemäße Zusammensetzung 4 weiset gegenüber den Vergleichsbeispielen 1 und 5 eine verbesserte Kerbschlagzähigkeit, verbesserte Vicat-Wärmeformbeständigkeit, kürzere Nachbrennzeit, besseres ESC-Verhalten, einen höheren E-Modul und bessere Reißdehnung sowie eine höhere Hydrolysebeständigkeit auf. Dieser technische Effekt geht zurück auf den Unterschied, dass in den Vergleichsbeispielen als Flammschutzmittel ein Oligophosphat eingesetzt wird.

Das Vergleichsbeispiel 3 unterscheidet sich von Vergleichsbeispiel 2 dadurch, dass die Zusammensetzung des Vergleichsbeispiels 2 einen höheren Gehalt an Schlagzähmodifikator B bei gleicher Menge Flammschutzmittel enthält. Dieser Unterschied bewirkt den technischen Effekt, dass die Zusammensetzung des Beispiels 3 gegenüber der Zusammensetzung des Vergleichbeispiels 2 insbesondere ein verbessertes Brandverhalten und eine höhere Wärmeformbeständigkeit (Vicat B) aufweist.

**Tabelle 1. Zusammensetzungen und ihre Eigenschaften**

| **Zusammensetzung** | | **1 (Vgl)** | **2 (Vgl)** | **3 (Vgl)** | **4** | **5 (Vgl)** |
|---|---|---|---|---|---|---|
| **A** | Gew.-Tle. | 90,0 | 79,9 | 90,0 | 84,9 | 84,9 |
| **B** | Gew.-Tle. | 5,0 | 15,1 | 5,0 | 5,0 | 5,0 |
| **C-1** | Gew.-Tle. | 5,0 | | | | 10,1 |
| **C-2** | Gew.-Tle. | | 5,0 | 5,0 | 10,1 | |
| **E-1** | Gew.-Tle. | 0,4 | 0,4 | 0,4 | 0,4 | 0,4 |
| **E-2** | Gew.-Tle. | 0,4 | 0,4 | 0,4 | 0,4 | 0,4 |
| **E-3** | Gew.-Tle. | 0,1 | 0,1 | 0,1 | 0,1 | 0,1 |
| | | | | | | |
| **Eigenschaften**: | | | | | | |
| **aₖ** (ISO 180/1A) 240°C/RT [spröd] | kJ/m² | 9 | 29 | 21 | 18 | 6 |
| **Vicat B 120** (ISO 306, DIN 53460) | °C | 125 | 137 | 142 | 142 | 112 |

| **Brandverhalten (UL 94 V, 1,5mm)** | | | | | | |
|---|---|---|---|---|---|---|
| 2d [Bewertung] | | V 0 | V 1 | V 0 | V 0 | V 0 |
| 2d [Gesamt-NBZ] | s | 22 | 115 | 13 | 5 | 9 |
| 2d [Einstufung] | | 10/-/-/- | 5/5/-/- | 10/-/-/- | 10/-/-/- | 10/-/-/- |
| 7d [Bewertung] | | V 0 | V 1 | V 0 | V 0 | V 0 |
| 7d [Gesamt-NBZ] | s | 23 | 95 | 10 | 7 | 14 |
| 7d [Einstufung] | | 10/-/-/- | 6/4/-1- | 10/-/-/- | 10/-/-/- | 10/-/-/- |
| **ESC-Verhalten** / [2,4%] | Bewertung | BR | BR | BR | BR | BR |
| | min:sec | 0:44 | 03:42 | 1:51 | 3:33 | 1:11 |

| **Zugversuch nach ISO 527** | | | | | | |
|---|---|---|---|---|---|---|
| Zug-E-Modul | N/mm² | 2568 | 2750 | 2733 | 2889 | 2566 |
| Reißdehnung (DR) | % | 55 | 100 | 102 | 104 | 31 |

| **Hydrolysetest (MVR 240°C/5 kg)** | | | | | | |
|---|---|---|---|---|---|---|
| Ausgangsprobe | cm³/10min | 8,6 | 12,9 | 4,1 | 3,5 | 15,4 |
| Lagerung 1d/19 °C | cm³/10min | 9,6 | 13,3 | 4,2 | 3,7 | 20,8 |
| Lagerung 2d / 95 °C | cm³/10min | 10,3 | 13,9 | 4,3 | 4,0 | 28,6 |
| Lagerung 5d / 95 °C | cm³/10min | 13,7 | 14,9 | 5,4 | 4,8 | 87,5 |
| Lagerung 6d / 95 °C | cm³/10min | 15,6 | 16,2 | 5,5 | 5,5 | >100 |
| Lagerung 7d / 95 °C | cm³/10min | 17,4 | 17,8 | 5,7 | 6,1 | >100 |

| MVR-Zunahme bei Lagerung relativ zur Ausgangsprobe | | | | | | |
|---|---|---|---|---|---|---|
| Lagerung 1 d / 95 °C | % | 11 | 3 | 3 | 8 | 35 |
| Lagerung 2d / 95 °C | % | 19 | 8 | 7 | 16 | 86 |
| Lagerung 5d / 95 °C | % | 58 | 16 | 33 | 38 | 468 |
| Lagerung 6d / 95 °C | % | 81 | 26 | 35 | 58 | |
| Lagerung 7d / 95 °C | % | 101 | 38 | 40 | 75 | |

| | | | | | | |
|---|---|---|---|---|---|---|
| BR = Bruch NBZ = Nachbrennzeit | | | | | | |

## Patentansprüche

1. Zusammensetzungen enthaltend
A) 80 bis 90 Gew.-Teile (jeweils bezogen auf die Summe der Gewichtsteile der Komponenten A+B+C) aromatisches Polycarbonat und/oder aromatisches Polyestercarbonat,
B) 3 bis 8 Gew.-Teile (jeweils bezogen auf die Summe der Gewichtsteile der Komponenten A+B+C) kautschukmodifiziertes Pfropfpolymerisat hergestellt im Messe-, Lösungs- oder Masse-Suspensions-Polymerisationsverfahren,
C) 7 - 12 Gew.-Teile (jeweils bezogen auf die Summe der Gewichtsteile der Komponenten A+B +C), ein Salz oder eine Mischung von Salzen einer Phosphinsäure der Formel (IV). 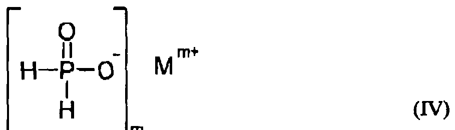 worin
M^{m+} ein Metallkation ausgewählt aus Li⁺, Na', K⁺ mit m = 1), aus Mg²⁺, Ca²⁺, Sr²⁺, Ba²⁺ mit m = 2, Al³⁺ mit m = 3, und Zn²⁺, Mn^{2'}, Fe²⁺ und/oder Fc³ mit m einer ganzen Zahl von 1 bis 6.
wobei die Zusammensctzungen frei ist von phosphorhaltigen Flammschutzmitteln ausgewählt aus den Gruppe der Mono- und oligomeren Phosphor- und Phosphonsäureester, Phosphonatamine und Phosphazene.

2. Zusammensetzung gemäß Anspruch 1, enthaltend 3 bis 8 Gew.-Teile (jeweils bezogen auf die Summe der Gewichtsteile der Komponenten A+B+C) kautschukmodifiziertes Pfropfpolymerisat gemäß Komponente B).

3. Zusammensetzung gemäß Anspruch 1 oder 2, enthaltend 7 bis 12 Gew.-Teile (jeweils bezogen auf die Summe der Gewichtsteile der Komponenten A+B+C) eines Salzes einer Phosphinsäure.

4. Zusammensetzung gemäß einem der Ansprüche 1 bis 3, enthaltend 0 bis 20 Gew.-Teile (bezogen auf die Summe der Gewichtsteile der Komponenten A+B+C = 100) kautschukfreies Vinyl(Co)Polymerisat und/oder Polyalkylenterephthalat als Komponente D).

5. Zusammensetzung gemäß einem der Ansprüche 1 bis 4, die frei ist von kautschukfreiem Vinyl(Co)Polymerisat und/oder Polyalkylenterephthalat.

6. Zusammensetzung gemäß einem der Ansprüche 1 bis 5, enthaltend 0 bis 50 Gew.-Teile (jeweils bezogen auf die Summe der Gewichststeile der Komponenten A+B+C = 100) Zusatzstoffe als Komponente E).

7. Zusammensetzung gemäß einem der Ansprüche 1 bis 6, enthaltend ein Pfropfpolymerisat gemäß Komponente B) hergestellt im Masse-, Lösungs- oder Masse-Suspensions-Polymerisationsverfahren, das einen Kautschukgehalt (entspricht dem Anteil der Komponente B.2 am Pfropfpolymerisat) von 16 bis 25 Gew.-% aufweist sowie eine Pfropfhülle, die jeweils bezogen auf die Monomere der Pfropfhülle 22 bis 27 Gew.-% mindestens eines der Monomeren gemäß B.1.2 und 73 bis 78 Gew.-% mindestens eines der Monomeren gemäß B.1.1 enthält.

8. Zusammensetzung gemäß Anspruch 7 mit einen Kautschukgehalt von 17 bis 19 Gew.-%.

9. Zusammensetzung gemäß Anspruch 7 oder 8, wobei das Pfropfpolymerisat einen Butadien-Styrol-Blockcopolymerkautschuk als Kern und eine Hülle aus Styrol (B.1.1) und Acrylnitril (B.1.2) enthält.

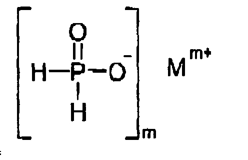

10. Zusammensetzung gemäß Anspruch 1 wobei M^{m1} = Ca²⁺ und m = 2 ist oder M^{m+} = Al³⁺ und m=3 ist.

11. Zusammensetzung gemäß Anspruch 1, wobei die mittlere Teilchengröße d₅₀ des Phosphinsäuresalzes (Komponente C) zwischen 10 und 55 µm ist.

12. Zusammensetzung gemäß einem der Ansprüche 1 bis 11, wobei die handelsübliche Zusatzstoffe gemäß Komponente E) Flammschutzsynergisten, von Komponente B) verschiedene kautschukmodifizierte Pfropfpolymerisate, Antidrippingmittel, Gleit- und Entformungsmittel, Nukleiermittel, Stabilisatoren, Antistatika, Säuren, Füll- und Verstärkungsstoffe sowie Farbstoffe und Pigmente sind.

13. Verwendung der Zusammensetzungen gemäß Anspruch 1 bis 12 zur Herstellung von Fonnkörpern.

14. Formkörper, enthaltend eine Zusammensetzung nach einem der Ansprüche 1 bis 12.

## Claims

1. Compositions comprising
A) from 80 to 90 parts by weight (based in each case on the total of the parts by weight of components A + B + C) of aromatic polycarbonate and/or of aromatic polyester carbonate,
B) from 3 to 8 parts by weight (based in each case on the total of the parts by weight of components A + B + C) of rubber-modified graft polymer produced in a bulk polymerization process, solution polymerization process or bulk-suspension polymerization process,
C) from 7 to 12 parts by weight (based in each case on the total of the parts by weight of components A + B + C) of a salt or a mixture of salts of a phosphinic acid of the formula (IV), 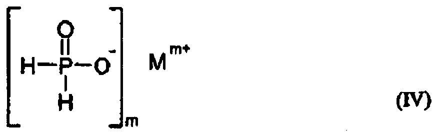 in which
M^{m+} is a metal cation selected from Li⁺, Na⁺, K⁺, where m = 1, or from Mg²⁺, Ca²⁺, Sr²⁺, Ba²⁺, where m = 2, Al³⁺, where m = 3, and Zn²⁺, Mn²⁺, Fe²⁺ and/or Fe³, where m is an integer from 1 to 6,
where the compositions are free from phosphorus-containing flame retardants selected from the groups of the monomeric and oligomeric phosphoric and phosphonic esters, phosphonate amines and phosphazenes.

2. Composition according to Claim 1, comprising from 3 to 8 parts by weight (based in each case on the total of the parts by weight of components A + B + C) of rubber-modified graft polymer according to component B).

3. Composition according to Claim 1 or 2, comprising from 7 to 12 parts by weight (based in each case on the total of the parts by weight of components A + B + C) of a salt of a phosphinic acid.

4. Composition according to any of Claims 1 to 3 comprising from 0 to 20 parts by weight (based in each case on the total of the parts by weight of components A + B + C = 100) of rubber-free vinyl (co)polymer and/or polyalkylene terephthalate as component D).

5. Composition according to any of Claims 1 to 4, which is free from rubber-free vinyl (co)polymer and/or polyalkylene terephthalate.

6. Composition according to any of Claims 1 to 5, comprising from 0 to 50 parts by weight (based in each case on the total of the parts by weight of components A + B + C = 100) of additives as component E).

7. Composition according to any of Claims 1 to 6, comprising a graft polymer according to component B) produced in a bulk polymerization process, solution polymerization process or bulk-suspension polymerization process and having from 16 to 25% by weight rubber content (corresponding to the proportion of component B.2 in the graft polymer), and also having a graft shell which comprises, based in each case on the monomers of the graft shell, from 22 to 27% by weight of at least one of the monomers according to B.1.2 and from 73 to 78% by weight of at least one of the monomers according to B.1.1.

8. Composition according to Claim 7 with from 17 to 19% by weight rubber content.

9. Composition according to Claim 7 or 8, where the graft polymer comprises a butadiene-styrene block copolymer rubber as core and a shell made of styrene (B.1.1) and acrylonitrile (B.1.2).

10. Composition according to Claim 1, where M^{m+} = Ca²⁺ and m = 2 or M^{m+} = Al³⁺ and m = 3.

11. Composition according to Claim 1, where the median particle size d₅₀ of the phosphinic salt (component C) is from 10 to 55µm.

12. Composition according to any of Claims 1 to 11, where the commercially available additives according to component E) are flame retardant synergists, rubber-modified graft polymers differing from component B), antidrip agents, lubricants and mould-release agents, nucleating agents, stabilizers, antistatic agents, acids, fillers and reinforcing materials, or else dyes and pigments.

13. Use of the compositions according to any of Claims 1 to 12 for producing mouldings.

14. Mouldings, comprising a composition according to any of Claims 1 to 12.

## Revendications

1. Compositions contenant
A) 80 à 90 parties en poids (chaque fois rapportées à la somme des parties en poids des composants A+B+C) de polycarbonate aromatique et/ou de polyestercarbonate aromatique,
B) 3 à 8 parties en poids (chaque fois rapportées à la somme des parties en poids des composants A+B+C) de polymère greffé modifié au caoutchouc fabriqué par un procédé de polymérisation en masse, en solution ou en masse-suspension,
C) 7 à 12 parties en poids (chaque fois rapportées à la somme des parties en poids des composants A+B+C) d'un sel ou d'un mélange de sels d'un acide phosphinique de la formule (IV), 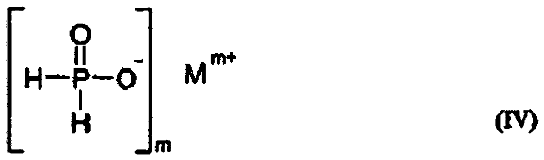 dans laquelle
M^{m+} est un cation métallique choisi parmi Li⁺, Na⁺, K⁺ avec m = 1, parmi Mg²⁺, Ca²⁺, Sr²⁺, Ba²⁺ avec m = 2, Al³⁺ avec m = 3, et parmi Zn²⁺, Mn²⁺, Fe²⁺ et/ou Fe³⁺ avec m = un nombre entier de 1 à 6,
les compositions étant exemptes d'agents de protection contre les flammes contenant du phosphore, choisis dans les groupes des esters d'acide phosphorique et phosphonique monomères et oligomères, des phosphonatamines et des phosphazènes.

2. Composition selon la revendication 1, contenant 3 à 8 parties en poids (chaque fois rapportées à la somme des parties en poids des composants A+B+C) de polymère greffé modifié au caoutchouc selon le composant B).

3. Composition selon la revendication 1 ou 2, contenant 7 à 12 parties en poids (chaque fois rapportées à la somme des parties en poids des composants A+B+C) d'un sel d'un acide phosphinique.

4. Composition selon l'une quelconque des revendications 1 à 3, contenant 0 à 20 parties en poids (chaque fois rapportées à la somme des parties en poids des composants A+B+C = 100) de (co)polymère de vinyle sans caoutchouc et/ou de polyalkylène téréphtalate comme composant D).

5. Composition selon l'une quelconque des revendications 1 à 4, qui est exempte de (co)polymère de vinyle sans caoutchouc et/ou de polyalkylène téréphtalate.

6. Composition selon l'une quelconque des revendications 1 à 5, contenant 0 à 50 parties en poids (chaque fois rapportées à la somme des parties en poids des composants A+B+C = 100) de substances d'addition comme composants E).

7. Composition selon l'une quelconque des revendications 1 à 6, contenant un polymère greffé selon le composant B) fabriqué par un procédé de polymérisation en masse, en solution ou en masse-suspension, qui présente une teneur en caoutchouc (qui correspond à la proportion du composant B.2 sur le polymère greffé) de 16 à 25 % en poids ainsi qu'une enveloppe de greffage, qui contient, chaque fois rapportés aux monomères de l'enveloppe de greffage, 22 à 27 % en poids d'au moins un des monomères selon B.1.2 et 73 à 78 % en poids d'au moins un des monomères selon B.1.1.

8. Composition selon la revendication 7, comprenant une teneur en caoutchouc de 17 à 19 % en poids.

9. Composition selon la revendication 7 ou 8, dans laquelle le polymère greffé contient un caoutchouc copolymère à blocs butadiène-styrène comme noyau et une enveloppe en styrène (B.1.1) et acrylonitrile (B.1.2).

10. Composition selon la revendication 1, dans laquelle M^{m+} = Ca²⁺ et m = 2 ou M^{m+} = Al³⁺ et m = 3.

11. Composition selon la revendication 1, dans laquelle la taille de particules moyenne d₅₀ du sel d'acide phosphinique (composant C) est comprise entre 10 et 55 µm.

12. Composition selon l'une quelconque des revendications 1 à 11, dans laquelle les adjuvants usuels dans le commerce selon le composant E) sont des synergistes de protection contre les flammes, des polymères greffés modifiés au caoutchouc différents du composant B), des agents anti-gouttes, des agents lubrifiants et de démoulage, des agents de nucléation, des stabilisants, des antistatiques, des acides, des substances de charge et de renforcement, ainsi que des colorants et des pigments.

13. Utilisation des compositions selon une revendication 1 à 12 pour la fabrication de corps moulés.

14. Corps moulé, contenant une composition selon l'une quelconque des revendications 1 à 12.
